beträgt und wobei der Gehalt an Polyisobutylenblöcken der Komponente C) vorzugsweise zwischen 1/5 und 1/20 des Gehalts der Komponente B) am Gesamtgewicht der Mischung aus A) + B) + C) beträgt.

**3.** Mischungen gemäß Anspruch 2, dadurch gekennzeichnet, daß die Komponenten

A) 60 Gew.-% bis 85 Gew.-%,
B) 5 Gew.-% bis 15 Gew.-% und
C) 10 Gew.-% bis 35 Gew.-% betragen.

**4.** Mischungen gemäß Anspruch 2, dadurch gekennzeichnet, daß das mittlere Molekulargewicht der Polyisobutylenblöcke der Komponente C) 1000 bis 10 000 g/Mol beträgt.

**5.** Verfahren zur Herstellung der Mischungen des Anspruchs 2, dadurch gekennzeichnet, daß man die Komponenten A), B) und C) in Substanz in der Schmelze in einem Kneter oder in einem Extruder mischt und anschließend abkühlt und granuliert oder
daß man Lösungen der Komponenten A), B) und C) in organischen Lösungsmitteln mischt und gemeinsam in einem Ausdampfextruder eindampft, anschließend wiederum abkühlt und granuliert.

**Beispiel 3**

(Herstellung einer Mischung aus A) + B) + C))

Man löst 400 g der Komponente C) nach Beispiel 1 und 1 440 g Homopolycarbonat aus 2,2-Bis(4-hydroxyphenyl)-propan mit einem $\lambda_{rel}$ von 1,28 in einem Gemisch aus 3 l Chlorbenzol und 8 l $CH_2Cl_2$, fügt die Lösung von 160 g Polyisobutylen mit einer Molmasse von 400 000 g/mol in Chlorbenzol hinzu und dampft das Gemisch mit einem Ausdampfextruder (ZSK 32 mit Vakkuumdom) bei 280°C ein. Der erhaltene Blend hat die folgenden Eigenschaften: Zäh-Sprödübergang des Bruches im Kerbschlagversuch zwischen -20 und -30°C. Ein Stab der Abmessung 80 mm x 10 mm x 4 mm wird auf eine Randfaserdehnung von 0,6 % gespannt und 2 min einer Mischung Isooctan/Toluol 1:1 ausgesetzt. Die Probe zeigt keine Risse. Die Farbe des Compounds ist hell-beige.

**Beispiel 4**

(Herstellung einer Mischung aus A) + B) + C))

Zwischenprodukt = Beispiel 1 von P 4 421 556.8 vom 20.6.94

Man läßt die Mischung aus 50 ml Maleinsäurediethylester und 118 g eines $\alpha,\omega$-Diaminopolyisobutylens, der Molmasse 3 500 g/Mol, hergestellt gemäß Beispiel 2 der DE-OS 4 122 655 beziehungsweise gemäß Beispiel 2 des US-PS 5 274 182 über Nacht bei 20°C stehen und erhitzt dann eine Stunde auf 100°C. Dann wird der überschüssige Maleinsäurediethylester im Vakuum (20 hPa) abdestilliert. Die Ausbeute an Polyisobutylen mit Asparaginsäurediethylesterendgruppen ist quantitativ.

Herstellung einer Komponente C) = Beispiel 2 von P 4 421 556.8 vom 20.6.94

Man löst 100 g des Polyisobutylens mit Asparaginsäurediethylesterendgruppen des vorstehenden Beispiels in 900 g Chlorbenzol und 1 900 g Homopolycarbonat aus 2,2-Bis-(4-hydroxyphenyl)-propan mit einem $\lambda_{rel}$ (gemessen in $CH_2Cl_2$ bei 25°C und einer Konzentration von 0,5 g in 100 ml $CH_2Cl_2$) von 1,28 in einem Gemisch aus 3 l Chlorbenzol und 8 l Methylenchlorid, mischt die Lösungen und dampft sie mit dem Ausdampfextruder (ZSK 32 mit Vakuumdom) bei 280°C ein. Das erhaltene modifizierte Polycarbonat hat die folgenden Eigenschaften: Zäh-spröd-Übergang des Bruches im Kerbschlagversuch bei -20°C. Ein Stab der Abmessung 80 mm x 10 mm x 4 mm wird auf eine Randfaserdehnung von 0,6 % gespannt und 2 min einer Mischung Isooctan/Toluol 1:1 ausgesetzt. Die Probe zeigt keine Risse (unmodifiziertes PC bricht unter diesen Bedingungen). Die Farbe des Compounds ist hellgelb.

Mischung aus A) + B) + C):

Man löst 400 g des Produktes aus Beispiel 2 von P 4 4421 556.8 vom 20.6.94 und 1 440 g Homopolycarbonat aus 2,2-Bis-(4-hydroxyphenyl)-propan mit einem $\lambda_{rel}$ von 1,28 in einem Gemisch aus 3 l Chlorbenzol und 8 l $CH_2Cl_2$ fügt die Lösung von 160 g Polyisobutylen mit einer Molmasse von 400 000 g/mol in Chlorbenzol hinzu und dampft das Gemisch mit einem Ausdampfextruder (ZSK 32 mit Vakuumdorn) bei 280°C ein. Der erhaltene Blend hat die folgenden Eigenschaften: Zäh-Sprödübergang des Bruches im Kerbschlagversuch zwischen -20 und -30°C. Ein Stab der Abmessungen 80 mm x 10 mm x 4 mm wird auf eine Randfaserdehnung von 0,6 % gespannt und 2 min einer Mischung Isooctan/Toluol 1:1 ausgesetzt. Die Probe zeigt keine Risse. Die Farbe des Compounds ist weiß.

**Patentansprüche**

1. Verwendung von Polycarbonat-Polyisobutylen-Blockcokondensaten als Kompatibilisatoren für Polycarbonat-Polyisobutylen-Mischungen.

2. Mischungen aus

   A) 50 Gew.-% bis 95 Gew.-% an thermoplastischen aromatischen Polycarbonaten,
   B) 2 Gew.-% bis 20 Gew.-% an Polyisobutylenen und
   C) 3 Gew.-% bis 48 Gew.-% an Polycarbonat-Polyisobutylen-Blockcokondensaten, wobei

   die Blockcokondensate 1 Gew.-% bis 30 Gew.-% an Polyisobutylenblöcken und 99 Gew.-% bis 70 Gew.-% an Polycarbonatstruktureinheiten enthalten, wobei das mittlere Molekulargewicht $\overline{M}w$ (Gewichtsmittel, ermittelt durch Gelchromatographie mit Polystyrolstandard) der Polyisobutylenblöcke der Komponente C) 250 bis 500 000 g/Mol

Die erfindungsgemäß als Komponente C) einzusetzenden Blockcokondensate haben mittlere Gewichtsmittelmolekulargewichte $\overline{M}w$ (ermittelt durch Gelchromatographie von 8 000 bis 200 000, vorzusweise von 10 000 bis 40 000.

Die Herstellung der erfindungsgemäßen Mischungen aus den Komponenten A), B) und C) erfolgt durch Mischen in der Schmelze in Knetern oder Extrudern oder durch gemeinsames Eindampfen der Lösungen der Komponenten in organischen Lösungsmitteln im Ausdampfextruder.

Bei der Mischung in der Schmelze sind Temperaturen von 220°C bis 380°C einzuhalten.

Geeignete Lösungsmittel für die Polycarbonatkomponente A) sind $CH_2Cl_2$, Chlorbenzol und Mischungen derselben; geeignete Lösungsmittel für die Polyisobutylenkomponente B) sind Chlorbenzol, Toluol, Xylol und $C_5$-$C_{18}$-Alkane sowie Mischungen dieser Lösungsmittel; geeignete Lösungsmittel für die Blockcokondensatkomponente C) sind Chlorbenzole, Methylenchlorid und deren Mischungen.

Gegenstand der vorliegenden Erfindung ist somit auch ein Verfahren zur Herstellung der erfindungsgemäßen Mischungen aus den Komponenten A) + B) + C), das dadurch gekennzeichnet ist, daß man die Komponenten A), B) und C) in Substanz in der Schmelze in einem Kneter oder einem Extruder mischt und anschließend abkühlt und granuliert oder daß man Lösungen der Komponenten A), B) und C) in organischen Lösungsmitteln mischt und gemeinsam in einem Ausdampfextruder eindampft, anschließend wiederum abkühlt und granuliert.

Die erfindungsgemäßen Mischungen aus den Komponenten A), B) und C) können noch die für Polycarbonate bzw. Butylkautschuke üblichen Additive zugesetzt enthalten, wie z.B. Stabilisatoren, Entformungsmittel, Alterungsschutzmittel, Flammschutzmittel etc. Diese Additive können während der Herstellung der Mischungen aus den Komponenten A), B) und C) oder vor der Verarbeitung der Mischungen zu beliebigen Formkörpern in üblichen Mengen zugesetzt werden.

Die Verarbeitung der Mischungen zu beliebigen Formkörpern erfolgt auf Extrudern oder Spritsgußmaschinen.

Beispiele für Formkörper sind Schläuche, Platten, Profile.

Diese finden technische Brauchbarkeit auf dem Automobilsektor und im Elektrobereich.

## Beispiele

### Beispiel 1

Herstellung einer Komponente C)

(entspricht dem Ausführungsbeispiel der deutschen Patentanmeldung P 4 420 656.9 (Le A 30 377))

Man löst 100 g eines im wesentlichen difunktionellen Methylamino-terminierten Polyisobutylentelechels mit einer NH-Zahl von 29, erhältlich gemäß Beispiel 5 der DE-OS 4 122 655 bzw. der US-PS 5 274 182 in 900 g Chlorbenzol und 1900 g Homopolycarbonat aus 2,2-Bis-(4-hydroxyphenyl)-propan mit einem $\lambda_{rel}$ (gemessen in $CH_2Cl_2$ bei 250°C und einer Konzentration von 0,5 g in 100 ml $CH_2Cl_2$) von 1,28 in einem Gemisch aus 3 l Chlorbenzol und 8 l $CH_2Cl_2$, mischt die Lösungen und dampft sie mit dem Ausdampfextruder (ZSK 32 mit Vakuumdorn) bei 280°C ein. Das erhaltene modifizierte Polycarbonat hat die folgenden Eigenschaften: Zäh-Sprödübergang des Bruches im Kerbschlagversuch bei -20°C. Ein Stab der Abmessung 80 x 10 x 4 mm wird auf eine Randfaserdehnung von 0,6 % gespannt und 2 min einer Mischung Isooctan/Toluol 1:1 ausgesetzt. Die Probe zeigt keine Risse. Die Farbe des Compounds ist hellbraun-braun.

### Beispiel 2

(Herstellung einer Mischung A) + B) + C))

Man mischt die Lösung aus 400 g der Komponente C) nach Beispiel 1 in 2 l Chlorbenzol und die Lösung aus 1420 g Homopolycarbonat aus Bisphenol A mit einer relativen Lösungsviskosität von 1,28 in 3 l Chlorbenzol und 8 l Methylenchlorid, dampft die Hauptmenge des Methylenchlorids ab und gibt die Lösung aus 180 g eines Polyisobutylens mit einem Comonomergehalt von 2,2 Mol-% Isopren und einer Mooney-Viskosität von 47 in 900 g Xylol hinzu und dampft die Mischung der Lösungen auf dem Ausdampfextruder bei 280°C ein.

Man erhält ein Material, das bei -20°C im Kerbschlagversuch Zähbruch zeigt und eine hohe Lösungsmittelbeständigkeit, besonders gegen Toluol und/oder Isooctan aufweist. Ein Stab der Abmessung 80 x 10 x 4 nm wird auf eine Randfaserdehnung von 1 % gespannt und 2 min einer Mischung Isooctan/Toluol 1:1 ausgesetzt. Die Probe zeigt keine Risse. Die Farbe des Compounds ist hellgelb.

2,4-Bis-(4-hydroxyphenyl)-2-methylbutan
1,1-Bis-(4-hydroxyphenyl)-cyclohexan
α,α'-Bis-(4-hydroxyphenyl)-p-diisopropylbenzol
2,2-Bis-(3-chlor-4-hydroxyphenyl)-propan
2,2-Bis-(3,5-dichlor-4-hydroxyphenyl)-propan
2,2-Bis-(3,5-dibrom-4-hydroxyphenyl)-propan und
1,1-Bis-(4-hydroxyphenyl)-3,3,5-trimethylcyclohexan.

Die erfindungsgemäß geeigneten Polycarbonate können auch in üblicher Weise verzweigt sein durch den Einbau von drei oder mehr als dreifunktionellen Verbindungen.

Polyisobutylene gemäß Komponente B) der vorliegenden Erfindung sind kationische Polymerisate von Olefinen und gegebenenfalls Dienen mit einem Gehalt von mindestens 85 % Isobutylen. Polyisobutylene sind unter dem Stichwort "Polyisobutylene" auf Seite 3539, Band 5, in Römpp Chemie Lexikon, 9. Auflage, 1992, Georg Thieme Verkag beschrieben. Die Molmasse der erfindungsgemäß zu verwendenden Polyisobutylene beträgt 1000 bis 5 000 000, vorzugsweise 10 000 bis 1 200 000 g/mol. Diese wird ermittelt durch Lichtstreuung.

Als Comonomere für Isobutylen geeignete Diene sind beispielsweise Butadien, Isopren, 2-Chlorbutadien-(1,4), 2-Brombutadien-(1,3), Pentadien, Hexadien, 2-Ethylbutadien-(1,3), 2-Propylbutadien-(1,3), 2-Phenylbutadien-(1,3), 2-Methylpentadien-(1,3) oder 3-Propylhexadien.

Andere geeignete olefinische Comonomere sind Styrol, α-Methylstyrol, m/p-Methylstyrol oder Divinylbenzol.

Derartige Produkte auch in Handel als Butylkautschuke erhältlich.

Die Polycarbonat-Polyisobutylen-Blockcokondensate gemäß Komponente C) sind literaturbekannt (siehe beispielsweise EP 0 305 718 und DE-OS 36 18 378 (Le A 24 330) bzw. US-PS 47 98 873) bzw. nach literaturbekannten Verfahren erhältlich. Sie sind auch Gegenstand unserer älteren deutschen Patentanmeldungen P 4 420 656.9 (Le A 30 377) und P 4 421 556.8 (Le A 30 215).

Die Polycarbonat-Polyisobutylen-Blockcokondensate gemäß Komponente C) werden aus reaktiven Polyisobutylenblöcken, sogenannten Polyisobutylentelechelen (siehe Römpp, Chemie Lexikon, 9. Auflage, Bd. 6, 1992, Seite 4485) mit einem $\overline{M}w$ (Gewichtsmittel, ermittelt wie bereits erwähnt) von 250 bis 500 000, vorzugsweise von 1000 bis 10 000 g/mol in bekannter Weise hergestellt. Derartige Polyisobutylentelechele sind in den bereits zitierten Lit.-Stellen, nämlich in der EP 0 305 718 und in der DE-OS 36 18 378 beschrieben, außerdem in der DE-OS 41 22 655 (Le A 28 403) bzw. in dem US-PS 52 74 182.

Die Polycarbonat-Anteile der Blockcokondensate der Komponente C) entsprechen den üblichen, aromatischen Polycarbonat-Struktureinheiten, wie sie zum Aufbau der bekannten thermoplastischen, aromatischen Polycarbonate, beispielsweise auch der Polycarbonate der Komponente A) dienen.

Die Polycarbonat-Struktureinheiten entsprechen bekanntlich der allgemeinen Formel (I) mit n = 1 und Ar = Arylen,

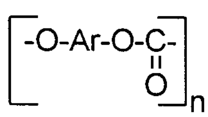

(I)

und liegen in den Polycarbonat-Polyisobutylen-Blockcokondensaten mit verschiedenen Blocklängen also Polymerisationsgraden "n" vor, je nach dem, ob die Herstellung der Blockcokondensate nach dem Phasengrenzflächenverfahren beispielsweise gemäß EP 0 305 718 mit Diphenolen oder durch Umsetzung mit Polycarbonatblöcken gemäß DE-OS 36 18 378 erfolgt.

Die bevorzugten Diphenole sind dieselben wie für den Aufbau der Polycarbonate der Komponente A), insbesondere aber 2,2-Bis-(4-hydroxyphenyl)-propan, 1,1-Bis-(4-hydroxyphenyl)-cyclohexan und 1,1-Bis-(4-hydroxyphenyl)-3,3,5-trimethylcyclohexan.

Demzufolge sind die Reste -Ar- der Formel (I) bevorzugt

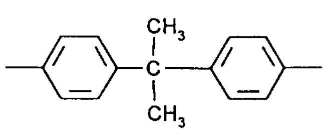 , 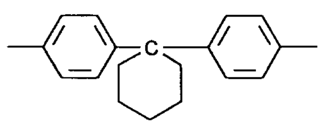 und 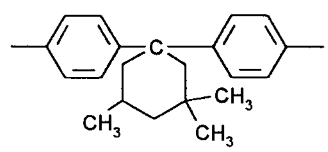

**Beschreibung**

Gegenstand der vorliegenden Erfindung ist die Verwendung von Polycarbonat-Polyisobutylen-Blockcokondensaten als Kompatibilisatoren für Polycarbonat-Polyisobutylen-Mischungen.

Aus US 34 31 224 sind Formmassen bekannt, die Polycarbonate und Polyolefine, z.B. Polyisobutylen, enthalten. Sie weisen eine gegenüber Polycarbonat verbesserte Widerstandsfähigkeit gegen Rißbildung auf die unter Umwelteinflüssen, z.B. Kontakt mit organischen Lösungsmitteln wie Aceton oder Tetrachlorkohlenstoff oder mit Alkalien eintritt.

Gemäß US-PS 38 13 358 werden derartige Polycarbonat-Polyolefin-Mischungen durch den Zusatz geringer Mengen an Pfropfpolymerisaten verbessert.

Aus der JA-57-125 252 sind Mischungen aus Polycarbonaten, Polyethylenen, Acrylelastomeren, Kautschuken und Schmiermitteln bekannt. Diese Mischungen haben eine verbesserte Lösungsmittelbeständigkeit, Schlagfestigkeit bei tiefer Temperatur und Nahtfestigkeit.

Aus der EP 0 077 415 (Le A 20 610) sind Mischungen von Polycarbonatelastomeren mit einkondensierten hydrierten Dimerfettsäureestern mit Polyolefinen und anderen Polycarbonaten bekannt. Als Polyolefine sind auch Polyisobutylene genannt. Die Mischungen haben eine reduzierte Spannungsrißbildungstendenz insbesondere gegen Superbenzin verbunden mit einer verbesserten Tieftemperaturschlagzähigkeit bis etwa -40°C. Jedoch führen mehrere Arbeitsschritte zu einer Verringerung der Wärmeformbeständigkeit durch Umesterung und einen Viskositätsabbau durch Schädigung der araliphatischen Carbonatstrukturen.

Gemäß DE-OS 36 18 378 (Le A 24 330) dienen Polyolefin-Polycarbonat-Blockcopolymere als Kompatibilitätsverbesserer oder Dispergatoren in unverträglichen thermoplastischen Polymermischungen, wie z.B. Polycarbonat/Polypropylen-Blends. Unter den Polyolefin-Polycarbonat-Blockcopolymeren sind auch Polyisobutylen-Polycarbonat-Blockcopolymere subsummiert.

Gemäß DE-OS 36 28 258 (Le A 24 655) sind Mischungen aus Polyisobutylenen, polysiloxanfreien, thermoplastischen Polycarbonaten und Polydiorganosiloxan-Polycarbonat-Blockcokondensaten bekannt (Seite 4, Zeilen 43 bis 47 der DE-OS). Die Mischungen zeigen eine erhöhte Kraftstoffbeständigkeit (Seite 6, Zeilen 47 bis 50 der DE-OS).

Mit PIB-Telechelen kompatibilisierte PC-PIB-Blends zeigen eine noch bessere Spannungsrißbeständigkeit.

Sie sind technisch leicht zugänglich und weisen keine umesterungsfähigen Weichblöcke, sondern temperaturbeständige, im wesentlichen gesättigte Polyisobutyleneinheiten auf.

Gegenstand der vorliegenden Erfindung sind somit außerdem Mischungen aus

A) 50 Gew.-% bis 95 Gew.-%, vorzugsweise 60 Gew.-% bis 85 Gew.-% an thermoplastischen, aromatischen Polycarbonaten,

B) 2 Gew.-% bis 20 Gew.-%, vorzugsweise 5 Gew.-% bis 15 Gew.-% an Polyisobutylenen und

C) 3 Gew.-% bis 48 Gew.-%, vorzugsweise 10 Gew.-% bis 35 Gew.-% an Polycarbonat-Polyisobutylen-Blockcokondensaten, wobei

die Blockcokondensate 1 Gew.-% bis 30 Gew.-% an Polyisobutylenblöcken und 99 Gew.-% bis 70 Gew.-% an Polycarbonatstruktureinheiten enthalten, wobei das mittlere Molekulargewicht $\overline{M}w$ (Gewichtsmittel, ermittelt durch Gelchromatographie mit Polystyrolstandard) der Polyisobutylenblöcke in Komponente C) 250 bis 500 000, vorzugsweise 1000 bis 10 000 g/Mol beträgt und wobei der Gehalt an Polyisobutylenblöcken der Komponente C) vorzugsweise zwischen 1/5 und 1/20 des Gehalts der Komponente B) am Gesamtgewicht der Mischung aus A) + B) + C) beträgt.

Thermoplastische aromatische Polycarbonate gemäß Komponente A) der vorliegenden Erfindung sind die üblichen auf Basis von Diphenolen, wie sie in der Technik verwendet werden und werden können. Sie sind zudem literaturbekannt (siehe beispielsweise die Monographie "H. Schnell, Chemistry and Physics of Polycarbonates, Interscience Publishers, New York, 1964").

Diphenole sind beispielsweise Dihydroxybenzole, Dihydroxybiphenyl, Dihydroxydiphenylether, Dihydroxydiphenylsulfid, Dihydroxydiphenylsulfon, Dihydroxydiphenylmethan (Bisphenol F), Dihydroxydiphenylmethan, Dihydroxydiphenylpropan (Bisphenol A), Dihydroxydiphenylcyclohexan (Bisphenol Z), 3,3,5-Trimethyl-1,1-(dihydroxydiphenyl)-cyclohexan, $\alpha,\alpha'$-(Dihydroxyphenyl)-diisopropylbenzole, Dihydroxybenzophenon oder Gemische dieser aromatischen Dihydroxyverbindungen, vorzugsweise Bisphenol A, Bisphenol Z, Dihydroxydiphenylmethan und 3,3,5-Trimethyl-1,1-(dihydroxydiphenyl)-cyclohexan, Bisphenol A ist besonders bevorzugt.

Die als Komponente A) dienenden Polycarbonate haben mittlere Gewichtsmittelmolekulargewichte $\overline{M}w$ (Gewichtsmittel, ermittelt beispielsweise durch Gelpermeationschromatographie) von 10 000 bis 200 000, vorzugsweise 15 000 bis 80.000 haben. Die Molekulargewichte können auch durch Bestimmung der relativen Viskosität in $CH_2Cl_2$ bei 25°C und einer Konzentration von 0,5 Gew.-% in bekannter Weise ermittelt werden. Bevorzugte Polycarbonate sind die aromatischen, thermoplastischen Polycarbonate, die bevorzugt aus mindestens einem der nachstehend aufgeführten Diphenole hergestellt sind. Es sind dies

4,4'-Dihydroxydiphenyl
2,2-Bis-(4-hydroxyphenyl)-propan (Bisphenol A)

(19) Europäisches Patentamt
European Patent Office
Office européen des brevets

(11) EP 0 691 378 A2

(12) **EUROPÄISCHE PATENTANMELDUNG**

(43) Veröffentlichungstag:
**10.01.1996 Patentblatt 1996/02**

(51) Int. Cl.[6]: **C08L 69/00**
// (C08L69/00, 23:22, 53:00)

(21) Anmeldenummer: **95109937.3**

(22) Anmeldetag: **26.06.1995**

(84) Benannte Vertragsstaaten:
**DE FR GB IT NL**

(30) Priorität: **08.07.1994 DE 4424070**

(71) Anmelder: **BAYER AG**
**D-51368 Leverkusen (DE)**

(72) Erfinder:
- **Köhler, Burkhard, Dr.**
**D-47829 Krefeld (DE)**
- **Ebert, Wolfgang, Dr.**
**D-47800 Krefeld (DE)**
- **Horn, Klaus, Dr.**
**D-41539 Dormagen (DE)**
- **Weider, Richard, Dr.**
**D-51381 Leverkusen (DE)**
- **Scholl, Thomas, Dr.**
**D-51469 Bergisch Gladbach (DE)**

(54) **Verwendung von Polycarbonat-Polyisobutylen-Blockcokondensaten als Kompatibilisatoren für Polycarbonat-Polyisobutylen-Mischungen**

(57) Gegenstand der vorliegenden Erfindung sind die Verwendung von speziellen Blockcokondensaten als Kompatibilisatoren für Polycarbonat-Polyisobutylen-Mischungen, Dreiermischungen aus den Blockcokondensaten mit den Polycarbonat-Polyisobutylen-Mischungen sowie die Herstellung dieser Mischungen.

EP 0 691 378 A2